# EUROPÄISCHE PATENTSCHRIFT

(11) **EP 1 645 503 B1**
(45) Veröffentlichungstag und Bekanntmachung des Hinweises auf die Patenterteilung: **26.03.2008**
(21) Anmeldenummer: 05022131.6
(22) Anmeldetag: 11.10.2005
(51) Int. Cl.: B64C 9/16

(54) **Flugzeugflügel, Verfahren zum Betreiben eines Flugzeugflügels und Verwendung einer schwenkbaren Hinterkante an einem Hauptflügel eines Flugzeugflügels zum Justieren der Form und Breite eines Luftspalts**
Aircraft wing, method for operation of an aircraft wing and use of a swivel trailing edge at a main wing of an aircraft wing for adjusting the shape and the width of an air slot
Aile d'un aéronef, procédé d'opération d'une aile d'un aéronef et emploi d'un bord de fuite pivotant sur une aile d'un aéronef pour ajuster la forme et la largeur d'un passage d'air

(30) Priorität: 11.10.2004 DE 102004049504; 11.10.2004 US 618051 P
(43) Veröffentlichungstag der Anmeldung: 12.04.2006
(73) Patentinhaber: Airbus Deutschland GmbH, 21129 Hamburg (DE)
(72) Erfinder: Reckzeh, Daniel, 28816 Stuhr (DE); Dyke, Adrian, R., Bristol BS34 6 JD (GB)
(74) Vertreter: Kopf, Korbinian Paul

(56) Entgegenhaltungen:
- DE-C1- 3 621 401
- FR-A- 728 528
- FR-A- 2 756 540
- US-A- 3 767 140
- US-A- 4 784 355

## Beschreibung

Die Erfindung betrifft einen Flugzeugflügel, ein Verfahren zum Betreiben eines Flugzeugflügels und die Verwendung einer schwenkbaren Hinterkante an einem Hauptflügel eines Flugzeugflügels zum Justieren der Form und der Breite eines Luftspalts.

Ein Flugzeug wird durch den aerodynamischen Auftrieb seiner Flügel getragen.

Ein Flugzeugflügel enthält einen Hauptflügel und in vielen Fällen daran angebrachte Auftriebshilfen. Eine Auftriebshilfe ist eine Vorrichtung an einem Tragflügel eines Flugzeuges, der zumindest in einem Teilbereich des Flugspektrums den Auftriebsbeiwert positiv verändert.

Auftriebshilfen werden insbesondere während der Landung und während des Starts eines Flugzeuges benutzt. Ziel ist es hierbei, durch den erhöhten Auftrieb die Landegeschwindigkeit bzw. die Startgeschwindigkeit und dadurch die Startstrecke bzw. die Landestrecke zu verringern.

Auftriebshilfen können an der Flügelvorderkante ("leading-edge") oder an der Flügelhinterkante ("trailing-edge") des Flugzeug angebracht sein. Ein wichtiges Beispiel für eine an der Flügelhinterkante angebrachte (flügelhinterseitige) Auftriebshilfe ist die sogenannte Fowlerklappe. Bei einer Fowlerklappe handelt es sich um ein Ruder, das unterhalb der Tragflügelhinterkante nach hinten gefahren und angestellt wird. Dadurch kann ein Luftspalt zwischen der Oberseite und der Unterseite des Flügels gebildet werden, wodurch sich die Tragflächenwölbung vergrößert. Zusätzlich wird auch die Flügelfläche vergrößert.

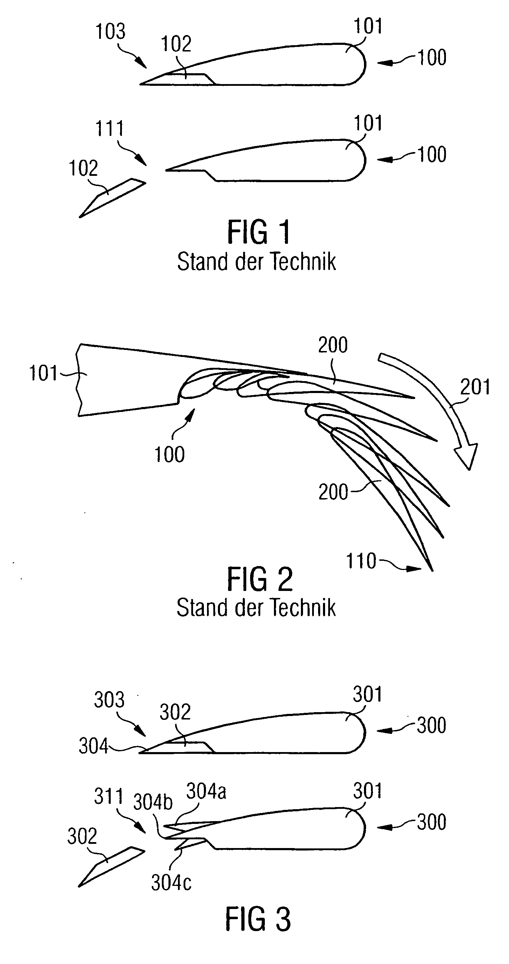

In **Fig. 1** sind ein eingefahrener Zustand 100 und ein ausgefahrener Zustand 110 einer an einem Hauptflügel 101 flügelhinterseitig befestigten Fowlerklappe 102 gezeigt. In dem eingefahrenen Zustand 100 liegt die Fowlerklappe 102 an dem Hauptflügel 101 an. Um die Fowlerklappe 102 von dem eingefahrenen Zustand 100 in den ausgefahrenen Zustand 110 zu bringen, wird die Fowlerklappe 102 zunächst zurückgefahren und nachfolgend nach unten abgeklappt. Dadurch wird ein Luftspalt 111 zwischen dem Hauptflügel 101 und der ausgefahrenen Fowlerklappe 102 erzeugt. Wie in Fig. 1 gezeigt, ist die Fowlerklappe 102 an der Flügelhinterkante 103 des Hauptflügels 101 angebracht.

Eine Fowlerklappe, die ausgefahren werden kann, um gemeinsam mit einem Hauptflügel einen Luftspalt zu bilden, ist aus dem Stand der Technik bekannt, siehe Rudolph, P "High-Lift Systems on Commercial Subsonic Airliners", NASA Contractor Report 4746, Kapitel 1.1.2. Bei einer Fowlerklappe ist es zum Erreichen guter Strömungseigenschaften wichtig, dass die Größe eines beim Ausfahren erzeugten Luftspaltes gut definiert ist, und dass ein divergenter Luftspalt über den gesamten Bereich des Ausschlagens der Fowlerklappe vermieden wird.

Dieses Erfordernis kann durch verschiedene kinematische Lösungen erfüllt werden, wobei gemäß dem Stand der Technik die sogenannte "Track and Rear-Link" Lösung (zum Beispiel realisiert bei dem Airbus A340) oder die "4-Bar-Linkage" Lösung (zum Beispiel realisiert bei der Boeing 777) eingesetzt werden, siehe Rudolph, P "High-Lift Systems on Commercial Subsonic Airliners", NASA Contractor Report 4746, Kapitel 1.2.2.

Eine Drehpunktkinematik ("Pivot-Point" bzw. "Dropped Hinge"), gemäß welcher die Klappe entlang eines kreisförmigen Pfads ausgefahren wird, wird ebenfalls gemäß dem Stand der Technik eingesetzt, zum Beispiel bei der Boeing C17. Eine solche Fowlerklappe 200 gemäß dem Stand der Technik ist in **Fig. 2** gezeigt. Die Fowlerklappe 200 wird entlang einer kreisförmigen Ausfahrrichtung 201 ausgehend von einem verstauten Zustand 100 in einen ausgefahrenen Zustand 110 gebracht.

Die "Track and Rear-Link" Kinematik zeigt eine gute Leistungsfähigkeit hinsichtlich der Aerodynamikeigenschaften. Die "Pivot-Point" Kinematik hat Vorteile hinsichtlich der Komplexität des Systems, was auch zu einem geringen Gewicht führt.

Allerdings weist sowohl die "Track and Linkage" Technologie als auch die "Pivot-Point" Technologie Nachteile auf.

Die Pivot-Kinematik erlaubt aufgrund der Beschränkung auf einen kreisförmigen Ausfahrpfad nur das Einstellen eines gewünschten Zielzustands beim Ausschlagen der Klappe. Die Breite und die Form des Spaltes für die Zwischenzustände während des Ausfahrens ergeben sich automatisch und können nicht eigens eingestellt werden. Die einstellbare Zieleinstellung wird in der Regel so gewählt, dass sie in dem voll ausgefahrenen Zustand 110 ein vorgebbares Ergebnis liefert. Für Zwischen-Ausfahrzustände nimmt die Breite des Luftspalts häufig einen kleineren als den optimalen Wert ein, wodurch die Qualität der Funktionalität der Klappe verringert werden kann, insbesondere können die Strömungseigenschaften der Klappe verschlechtert werden (Risiko von konfluenter Grenzschichtströmung). Aufgrund der kreisförmigen Bewegung ist die Gestalt des Spaltes in einem Zwischenzustand zum Teil divergent. Dies führt aufgrund einer lokalen Abbremsung der Strömungsgeschwindigkeit zu einem Separieren der Grenzschichtströmung an der Klappe mit einer nachfolgenden Verschlechterung der Auftriebsleistungen, was zusätzlich auch zum Auftreten von Vibrationen und Geräuschen führen kann. Im schlimmsten Fall kann dieser Effekt dazu führen, dass ein Bereich von nicht verwendbaren Zwischenpositionen der Klappe auftritt.

Ferner kann es bei einem fortgeschrittenen (hohen) Grad des Ausfahrens der Klappe unabhängig von der verwendeten Kinematik zu einer Grenzschichtablösung am Klappenelement kommen. Dieser Effekt limitiert die Effizienz der Klappe, definiert den maximal verwendbaren Klappenwinkel und bewirkt Vibrationen der Klappenelemente bei hohen Ausfahrwinkeln.

Die FR 2 756 540 beschreibt eine Anordnung zum Einstellen des Auftriebs eines Flugzeugs, wobei ein Hauptflügel eines Flugzeugs einen Flügel mit einer Austrittskante aufweist. Eine im hinteren Teil des Flügels angeordnete Platte erlaubt ein Durchströmen eines Luftflusses durch eine Passage, die zwischen dem Flügel und einer Klappe gebildet wird.

Die DE 36 21 401 beschreibt eine Klappenanordnung für einen Flugzeugtragflügel, bei der an der Tragflügelhinterkante eine Hochauftriebsklappe angeordnet ist. Zudem ist ein Spoiler an der oberen Hinterkante des Tragflügels angeordnet und kann sich derart drehen, dass ein Spalt zwischen der ausgefahrenen Hochauftriebsklappe und dem Tragflügel eingestellt werden kann.

Die FR 728 528 beschreibt eine Flügelanordnung für Flugzeuge, bei welcher ein Flügel aus drei Teilen besteht, wobei sich Flügelteile um Achsen drehbar sind. Beim Bewegen von Flügelteilen werden Luftspalte gebildet, welche einen Luftaustausch zwischen der Flügelunterseite und Flügeloberseite ermöglichen. An der Hinterkante des Flügels kann dabei eine bewegliche Kante eingerichtet sein, die in einem der beweglichen Teile derart koppelbar ist, dass bei Bewegung des beweglichen Teils sich die bewegbare Flügelhinterkante im gleichen Maße mit bewegt.

Die US 4 784 355 beschreibt ein Klappensystem, um die Start- und Landephase eines Flugzeugs zu verkürzen. Insbesondere wird ein Klappensystem für die Austrittskante eines geklappten Flügels eines Flugzeugs beschrieben, wobei das System Klappenhalterungen aufweist, die fest an die Austrittskante des Flügels montiert sind.

Die US 3 767 140 beschreibt ebenfalls ein Klappensystem für einen Flugzeugflügel, bei dem ein Flügel an der Hinterseite einen Spoiler sowie Klappen aufweist. Die Klappen bewegen sich im Wesentlichen achtern in der Luftstromrichtung und rotieren in einem Gelenksystem, welches ungefähr parallel zu dem hinteren Flügelholm ist.

Der Erfindung liegt das Problem zugrunde, einen Flugzeugflügel bereitzustellen, bei dem die Auftriebsleistungen des Flügels verbessert und unerwünschte Vibrationen und Geräusche vermieden sind.

Dieses Problem wird durch einen Flugzeugflügel, durch ein Verfahren zum Betreiben eines Flugzeugflügels und durch eine Verwendung einer schwenkbaren Hinterkante an einem Hauptflügel eines Flugzeugflügels zum Justieren der Form und der Breite eines Luftspalts mit den Merkmalen gemäß den unabhängigen Patentansprüchen gelöst.

Der erfindungsgemäße Flugzeugflügel enthält einen Hauptflügel mit einer schwenkbaren Hinterkante und eine flügelhinterseitige Auftriebshilfe-Klappe, wobei die Auftriebshilfe-Klappe mit dem Hauptflügel gekoppelt ist und derart eingerichtet ist, dass sie in einem eingefahrenen Zustand an dem Hauptflügel anliegt und in einem ausgefahrenen Zustand mit dem Hauptflügel einen Luftspalt bildet. Die schwenkbare Hinterkante ist derart an einem Spoiler angebracht, dass mittels Schwenkens der schwenkbaren Hinterkante die Form und die Breite des Luftspalts justierbar ist.

Ferner ist erfindungsgemäß ein Verfahren zum Betreiben eines Flugzeugflügels geschaffen, bei dem eine mit einem Hauptflügel gekoppelte flügelhinterseitige Auftriebshilfe-Klappe von einem eingefahrenen Zustand, in dem die Auftriebshilfe-Klappe an dem Hauptflügel anliegt, in einen ausgefahrenen Zustand gebracht wird, in dem die Auftriebshilfe-Klappe mit dem Hauptflügel einen Luftspalt bildet. Ferner wird eine an einem Spoiler schwenkbar angebrachte Hinterkante des Hauptflügels derart geschwenkt, dass mittels des Schwenkens der schwenkbaren Hinterkante die Form und die Breite des Luftspalts justiert wird.

Darüber hinaus ist erfindungsgemäß die Verwendung einer schwenkbaren Hinterkante an einem Spoiler eines Hauptflügels eines Flugzeugflügels zum Justieren der Form und der Breite eines Luftspalts zwischen dem Hauptflügel und einer ausgefahrenen flügelhinterseitigen Auftriebshilfe-Klappe mittels Schwenkens der schwenkbaren Hinterkante bereitgestellt.

Eine Grundidee der Erfindung ist darin zu sehen, dass eine schwenkbare Hinterkante eines Hauptflügels, d.h. ein schwenkbares Element, an einem flügelhinterseitigen Endabschnitt eines Hauptflügels (d.h. eines an einem Flugzeugrumpf angebrachten Flügelträgerkörpers) vorgesehen wird und mittels Drehens der schwenkbaren Hinterkante die Breite und Form eines Luftspalts zwischen einer flügelhinterseitigen Auftriebshilfe-Klappe (zum Beispiel eine Fowlerklappe) und dem Hauptflügel auf einen gewünschten Wert eingestellt wird. Wird die Breite des Luftspalts konstant und frei von Divergenzen eingestellt, kann die Ablösung der Grenzschichtströmung auf der Klappe unterdrückt und ein resultierendes unerwünschtes Vibrieren und unerwünschte Geräusche stark reduziert oder ganz vermieden werden. Die hohe Empfindlichkeit der erfindungsgemäßen Luftspalt-Justierung ist darauf zurückzuführen, dass lediglich eine Endspitze, das heißt ein kleiner Endbereich, des Hauptflügels, nämlich dessen schwenkbare Hinterkante, hinsichtlich ihrer Positionierung bzw. Winkelstellung eingestellt wird. Dadurch kann die Luftspaltbreite sehr sensitiv gesteuert werden. Somit wird erfindungsgemäß nur eine fein justierbare Endspitze geschwenkt.

Das gesteuerte Schwenken der Endspitze erlaubt es insbesondere während des gesamten Ausfahrens der flügelhinterseitigen Auftriebshilfe-Klappe (insbesondere eine Fowlerklappe) aus dem eingefahrenen (verstauten) Zustand in den ausgefahrenen Zustand, die Luftspaltbreite mittels gezielten Hin- und Zurückschwenkens der schwenkbaren Hinterkante durchgehend einzustellen.

Somit ist erfindungsgemäß die Aerodynamik eines Flugzeugs mittels Bewegens einer feinen Endspitze an einer Flügelhinterkante verbessert, anschaulich eine "Movable Shroud Trailing Edge". Dies ermöglicht eine Optimierung der aerodynamischen Auslegung von Hochauftriebssystemen, insbesondere auch für die Optimierung von Klappen mit einer Kreisbogen (Pivot)-Kinematik. Numerische Berechnungen und Windkanaluntersuchungen haben gezeigt, dass die Aerodynamik eines Flügels mit der erfindungsgemäßen schwenkbaren Hinterkante gegenüber konventionellen Verfahren signifikant verbessert ist.

Die bewegbare Flügelhinterkante der Erfindung kann über die gesamte Spannbreite der Auftriebshilfe-Klappe bzw. des Flugzeugflügels hinweg oder nur über einen Teilbereich hinweg gebildet sein.

Das erfindungsgemäße Flügelhinterkanteteil kann als flexibles Teil vorgesehen sein, dass unter Verwendung einer Federspannung geschwenkt werden kann, oder kann mittels eines Aktuators betrieben werden.

Bei Einsatz einer Federspannung drückt zum Beispiel die ausfahrbare Vorrichtung gegen das bewegbare Flügelhinterkanteteil, fährt es ausgehend von einem verstauten Zustand in einen ausgefahrenen Zustand aus, und belässt es im ausgefahrenen Zustand in einer vorbestimmten Position. Ein Beispiel für eine solche Vorrichtung könnte eine gefederte Platte ("sprung plate") oder ein "Memory"-Material sein.

Die aktive Bewegung eines bewegbaren Flügelhinterkanteteils der Erfindung kann auf verschiedene Weise herbeigeführt werden, zum Beispiel mittels eines mechanischen oder hydraulischen Ingangsetzens, oder durch andere Mittel, wie zum Beispiel die Verwendung eines Bimetallstreifens, der elektrisch aktiviert werden kann.

Wenn sich die Klappe auf dem kinematischen Ausfahrpfad ausgehend von der zusammengezogenen Position rückwärts bewegt und sich der Luftspalt zwischen Shroud und der oberen Fläche der Klappe öffnet, kann das bewegbare Flügelhinterkanteteil nach unten hin ausgefahren werden und verändert die Gestalt des Luftspalts in vorgebbarer Weise.

Die Erfindung kann entweder bei der Gestaltung eines neuen Flugzeugs eingesetzt werden oder bei einem Umrüsten eines bereits existierenden Flugzeugs oder Flugzeugmodells.

Erfindungsgemäß wird die Winkelstellung einer Endspitze des Hauptflügels, d.h. einer schwenkbaren Hinterkante, zur Steuerung der Spaltenbreite bzw. der Spaltenform eingestellt. Es ist wichtig, dass die schwenkbare Hinterkante als ein relativ kleines Teil einer größeren Komponente vorgesehen wird, weil nur dadurch eine besonders feine Steuerung der Spaltgeometrie ermöglicht ist, insbesondere bei einem einfachen Ausfahrmechanismus. Der Längenanteil der bewegbaren Hinterkante beträgt vorzugsweise höchstens 10% der Tiefe des Flügelelements, an dem sie angebracht ist.

Die Stellung der nach unten hin schwenkbaren Hinterkante hat eine empfindliche Auswirkung auf die Feinjustierung der Spaltbreite zwischen der Klappe und dem Hauptflügel und hat somit einen vorteilhaften Einfluss auf die Qualität der Strömungseigenschaften an der Klappe in einer Zwischenposition zwischen einem verstauten Zustand und einem voll ausgefahrenen Zustand. Die Divergenz des Spalts ist auch bei einem kreisförmigen Ausfahrpfad erfindungsgemäß reduziert oder sogar vollständig kompensiert, aufgrund des räumlich justierbaren bewegbaren Hinterkante. Das Abbremsen der Strömung in einem Umgebungsbereich der Klappe ist vermieden, wodurch eine unerwünschte Grenzschichtablösung unterdrückt ist und Vibrationen und Verringerungen in der Leistungsfähigkeit vermieden sind.

Ferner kann insbesondere für große Ausfahrwinkel der Klappe das Einsetzen der Grenzschichtablösung an der Klappe verzögert werden. Der nutzbare Ausfahrbereich der Klappe kann zu größeren Winkeln hin erweitert werden, und die Klappenperformance wird verbessert. Das Risiko des Auftretens einer Vibration bei einem hohen Winkel ist verringert.

Bevorzugte Weiterbildungen der Erfindung ergeben sich aus den abhängigen Ansprüchen.

Im Weiteren werden bevorzugte Weiterbildungen des erfindungsgemäßen Flugzeugflügels beschrieben. Diese gelten auch für das Verfahren zum Betreiben eines Flugzeugflügels und für die Verwendung der Erfindung.

Bei dem Flugzeugflügel kann die schwenkbare Hinterkante derart eingerichtet sein, dass mittels Schwenkens der schwenkbaren Hinterkante die Breite des Luftspalts konstant oder konvergent gehalten ist. Bei einer konstanten Breite des Luftspaltes sind Grenzschichtablösungen und andere Ursachen für ein unerwünschtes Vibrieren bzw. für unerwünschte Geräusche vermieden.

Die schwenkbare Hinterkante kann derart eingerichtet sein, dass mittels Schwenkens der schwenkbaren Hinterkante die Breite des Luftspalts während des Ausfahrens der Auftriebshilfe-Klappe von dem eingefahrenen Zustand in den ausgefahrenen Zustand zumindest zeitweise konstant oder konvergent gehalten ist. Zum Beispiel kann eine Steuereinheit vorgesehen sein, welche während des Ausfahrens der Fowlerklappe den jeweiligen Abstand bzw. die Luftspaltbreite misst und einen Antrieb für die schwenkbare Hinterkante so nachregelt, dass die Breite des Luftspalts konstant oder konvergent gehalten wird.

Die schwenkbare Hinterkante kann sich entlang der gesamten Spannbreite der Fowlerklappe erstrecken. Alternativ kann sich die schwenkbare Hinterkante entlang nur eines Teilbereichs der Spannbreite der Fowlerklappe erstrecken.

Die schwenkbare Hinterkante ist an einem Spoiler angebracht, der selbst an einem Gehäuse des Hauptflügels angebracht ist. Neben der üblichen Spoilerfunktion, für welche der Spoiler ausgefahren und somit bewegt wird, kann der Spoiler im eingefahrenen Zustand so betrieben werden, dass an einem flügelhinterseitigen Endabschnitt des Spoilers die schwenkbare Hinterkante gebildet ist, die über einen vorgebbaren Winkelbereich hinweg geschwenkt werden kann, womit eine vorgebbare Luftspaltbreite exakt eingestellt werden kann.

Die schwenkbare Hinterkante kann mittels eines Federelements geschwenkt werden.

Alternativ kann die schwenkbare Hinterkante mittels einer Antriebseinrichtung geschwenkt werden, die zum Beispiel als eine elektrische Antriebseinrichtung oder als eine hydraulische Antriebseinrichtung eingerichtet sein kann.

Ferner kann ein Hilfsflügel ("vane", Vorflügel) bei dem Flugzeugflügel vorgesehen sein, wobei der Hilfsflügel im ausgefahrenen Zustand der Auftriebshilfe-Klappe zwischen dem Hauptflügel und der Auftriebshilfe-Klappe angeordnet ist. Mit Hilfe von einem solchen Vane kann ein Flugzeugflügel mit einer Mehrzahl von Luftspalten, insbesondere mit zwei oder mit drei Luftspalten, gebildet werden.

Es können im ausgefahrenen Zustand der Auftriebshilfe-Klappe zwischen dem Hauptflügel und der Auftriebshilfe-Klappe mehrere Luftspalten gebildet sein.

Fowlerklappe. Eine Fowlerklappe ist ein Element, das unterhalb der Tragflügelhinterkante nach hinten gefahren und angestellt werden kann. Dadurch kann ein Luftspalt (oder können mehrere Luftspalte) zwischen der Oberseite und der Unterseite des Flügels gebildet werden, wodurch sich die Tragflächenwölbung vergrößert. Zusätzlich kann auch die effektive Flügelfläche vergrößert werden. Erfindungsgemäß wird die Breite des Luftspalts justiert, indem die schwenkbare Hinterkante entsprechend geschwenkt wird.

Alternativ kann bei dem Flugzeugflügel der Erfindung die flügelhinterseitige Auftriebshilfe-Klappe eine Spaltklappe sein. Bei einer Spaltklappe wird zum Ausfahren ein Ruder nach unten geklappt. Simultan gibt diese Bewegung einen Luftspalt (oder mehrere Luftspalte) frei, der Luft auf die Oberseite der Klappe lässt und so einen Strömungsabriss vermeidet. Bei einer Spaltklappe wird die Tragflächenwölbung verändert. Erfindungsgemäß wird die Breite des Luftspalts justiert, indem die schwenkbare Hinterkante entsprechend geschwenkt wird.

Die Erfindung kann nicht nur auf eine Fowlerklappe oder eine Spaltklappe angewendet werden, sondern auf jede Auftriebshilfe-Klappe, bei der im ausgefahrenen Zustand ein Luftspalt erzeugt wird, dessen Dimensionen gesteuert werden sollen.

Ausführungsbeispiele der Erfindung sind in den Figuren gezeigt und werden im Weiteren näher beschrieben.

Es zeigen:
Fig. 1 einen Hauptflügel mit einer Fowlerklappe gemäß dem Stand der Technik,
Fig. 2 eine andere Fowlerklappe an einem Hauptflügel gemäß dem Stand der Technik,
Fig. 3 einen Flugzeugflügel gemäß einem Beispiel zum Verständnis der Erfindung,
Fig. 4 einen Flugzeugflügel gemäß einem weiteren Beispiel zum Verständnis der Erfindung,
Fig. 5 einen Flugzeugflügel gemäß einem Ausführungsbeispiel der Erfindung,
Fig. 6 einen Flugzeugflügel gemäß einem weiteren Beispiel zum Verständnis der Erfindung,
Fig. 7A bis Fig. 8B numerische Strömungssimulationen, aus denen verbesserte Strömungseigenschaften des erfindungsgemäßen Flugzeugflügels ersichtlich sind.

Die Darstellungen in den Figuren sind schematisch und nicht maßstäblich.

Gleiche oder ähnliche Komponenten in unterschiedlichen Figuren sind mit gleichen Bezugsziffern versehen.

Im Weiteren wird bezugnehmend auf **Fig. 3** ein Flugzeugflügel gemäß einem Beispiel zum Verständnis der Erfindung beschrieben.

Der Flugzeugflügel gemäß dem ersten Ausführungsbeispiel der Erfindung ist in Fig. 3 in einem verstauten Zustand 300 gezeigt, in dem eine Fowlerklappe 302 an einem Hauptflügel 301 anliegt, und ist in einem ausgefahrenen Zustand 310 gezeigt, in dem die Fowlerklappe 302 mit dem Hauptflügel 301 einen Luftspalt 311 bildet.

Fig. 3 zeigt einen Flugzeugflügel mit dem Hauptflügel 301, der Fowlerklappe 302 und einer schwenkbaren Hinterkante 304 des Hauptflügels 301. Die Fowlerklappe 302 ist an dem Hauptflügel 301 ausfahrbar angebracht (das entsprechende Kopplungselement ist in Fig. 3 nicht gezeigt) und ist derart eingerichtet, dass sie in einem verstauten Zustand 300 an dem Hauptflügel 301 anliegt und in einem ausgefahrenen Zustand 310 mit dem Hauptflügel 301 einen Luftspalt 311 bildet. Die schwenkbare Hinterkante 304 ist an einem Endabschnitt, genauer gesagt an einem flügelhinterseitigen Endabschnitt, des Hauptflügels 301 angebracht und ist derart schwenkbar ist, dass mittels Schwenkens der schwenkbaren Hinterkante 304 die Breite des Luftspalts 311 justierbar ist.

In Fig. 3 ist die schwenkbare Hinterkante 304 in einem ersten Schwenkzustand 304a, in einem zweiten Schwenkzustand 304b und in einem dritten Schwenkzustand 304c gezeigt. Der zweite Schwenkzustand 304b zeigt eine Ruhestellung der Endspitze. Der erste Schwenkzustand 304a zeigt eine Auslenkung der Endspitze nach oben hin, verglichen mit der Ruhestellung der Endspitze. Der dritte Schwenkzustand 304c zeigt eine Auslenkung der Endspitze nach unten hin, verglichen mit der Ruhestellung der Endspitze. Je nach dem einstellten Schwenkzustand 304a bis 304c kann die Breite des Luftspalts 311 feinjustiert werden, wodurch unerwünschte Strömungsablösungen, Vibrationen und Geräusche im Flugzeuginneren vermieden sind. Ferner kann während des gesamten Ausfahrens, das heißt während des Übergangs von dem Zustand 300 in den Zustand 310, die Breite des Luftspalts 311 gesteuert bzw. kontrolliert werden.

Die schwenkbare Hinterkante 304 ist derart schwenkbar, dass mittels Schwenkens der schwenkbaren Hinterkante 304 die Breite des Luftspalts 311 konstant gehalten wird, und zwar während des Übergangs der Fowlerklappe 302 von dem verstauten Zustand 300 in den ausgefahrenen Zustand 310. Die schwenkbare Hinterkante 304 erstreckt sich in einer Richtung senkrecht zu der Papierebene von Fig. 3 entlang der gesamten Spannbreite der Fowlerklappe 302. Die schwenkbare Hinterkante 304 ist an einem oberen Gehäuseendabschnitt des Hauptflügels 301 angebracht und ist mittels einer hydraulischen Antriebseinheit (nicht gezeigt) schwenkbar.

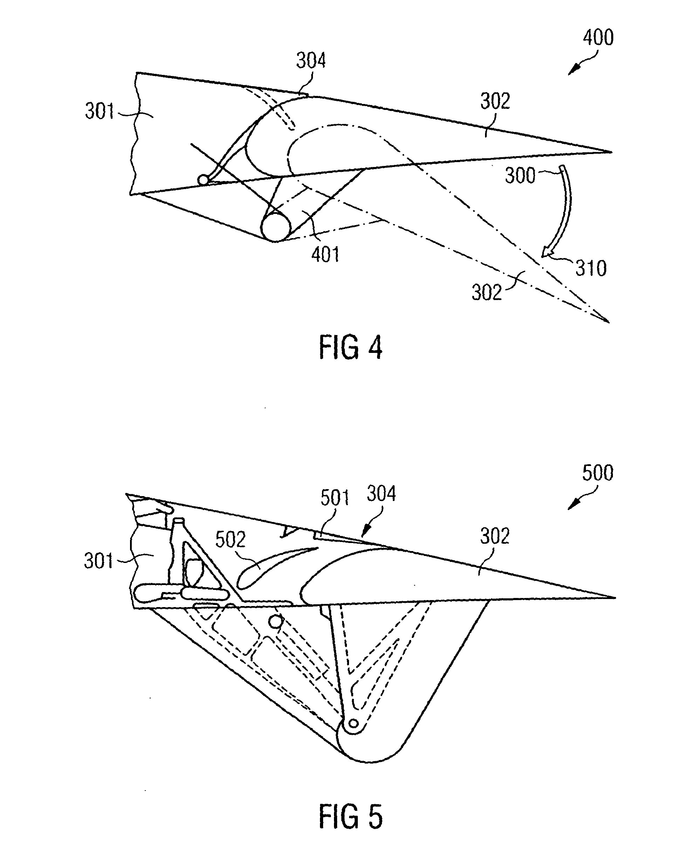

Im Weiteren wird bezugnehmend auf **Fig. 4** ein Flugzeugflügel 400 gemäß einem weiteren Beispiel zum Verständnis der Erfindung beschrieben.

Der Flugzeugflügel 400 zeigt einen sogenannten "slotted flap", das heißt eine Fowlerklappe 302, die bei einem Übergang von dem verstauten Zustand 300 in den ausgefahrenen Zustand 310 nur einen einzigen Luftspalt erzeugt. Mittels eines Schwenkarms 401 wird die Fowlerklappe 302 durch Zurückfahren und nachfolgendes Schwenken von Zustand 300 in Zustand 310 gebracht. Um während dieses Übergangs eine konstante Breite oder eine Konvergenz des Luftspalts zwischen der Fowlerklappe 302 und dem Hauptflügel 301 zu ermöglichen, wird z.B. mit einer elektronischen Motorsteuerung eine schwenkbare Hinterkante 304 des Hauptflügels 301 gemäß Fig. 4 leicht von oben nach unten geschwenkt.

Im Weiteren wird bezugnehmend auf **Fig. 5** ein Flugzeugflügel 500 gemäß einem Ausführungsbeispiel der Erfindung beschrieben.

Bei dem Flugzeugflügel 500 ist ein Spoiler 501 auf einer Oberseite eines flügelhinterseitigen Endabschnitts eines Hauptflügels 301 vorgesehen. Der Spoiler 501 kann bedarfsweise ausgefahren werden, um die Aerodynamikeigenschaften des Flugzeugflügels 500 zu beeinflussen. An einem Endabschnitt des Spoilers 501 ist eine schwenkbare Hinterkante 304 angebracht, die in Fig. 5 in zwei unterschiedlichen Betriebsstellungen gezeigt ist.

Fig. 5 zeigt eine Konfiguration mit einem "double slotted flap", so dass zwei Luftspalte erzeugt werden können. Hierfür ist ein Hilfsflügel 502 ("vane") zwischen der Fowlerklappe 302 und dem Hauptflügel 301 gebildet.

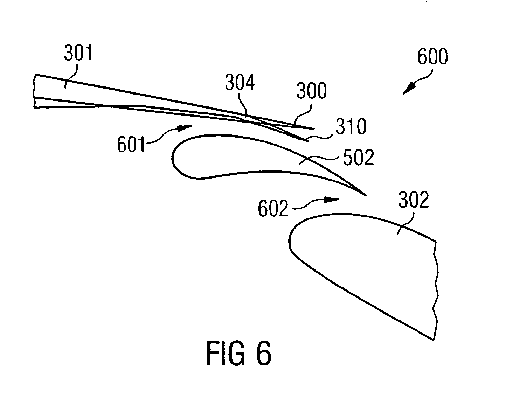

Im Weiteren wird bezugnehmend auf **Fig. 6** ein Flugzeugflügel 600 gemäß einem weiteren Beispiel zum Verständnis der Erfindung beschrieben.

Der Flugzeugflügel 600 ist ähnlich wie der Flugzeugflügel 500 mit einem "double slotted flap" ausgestattet und zeigt eine Konfiguration, bei der ein Hauptflügel 301, ein Hilfsflügel 302 ("vane") und eine Fowlerklappe 302 einen ersten Luftspalt 601 bzw. einen zweiten Luftspalt 602 bilden. An einem Endabschnitt des Hauptflügels 301 ist wiederum eine schwenkbare Hinterkante 304 angebracht, die bei einem Übergang von einem verstauten Zustand in einen ausgefahrenen Zustand der Fowlerklappe 302 von Zustand 300 in Zustand 310 gebracht wird. Anders ausgedrückt zeigt Zustand 300 einen Baseline-Zustand der schwenkbaren Hinterkante 304, und Zustand 310 zeigt einen Endzustand der schwenkbaren Hinterkante 304 in einer Stellung maximaler Auslenkung.

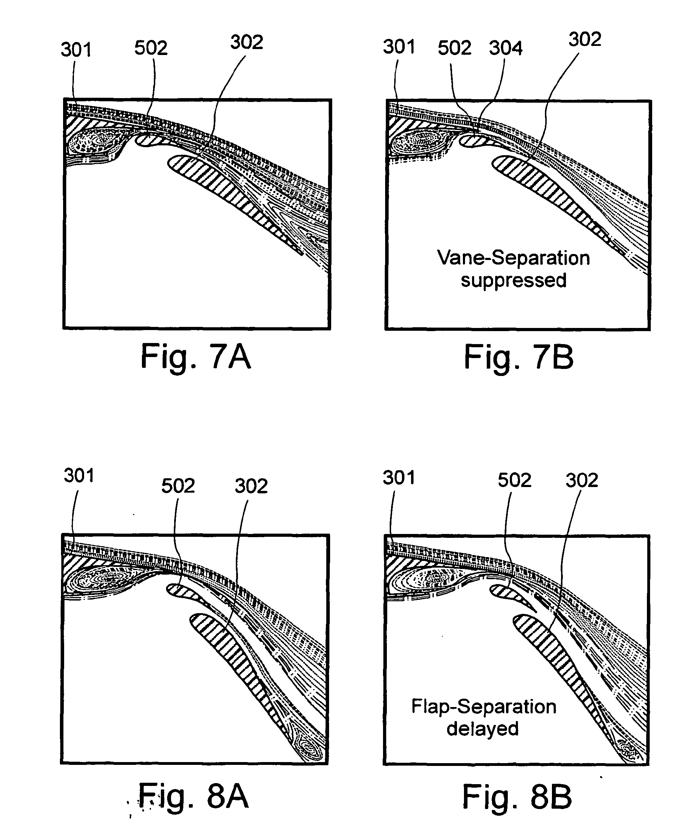

Im Weiteren wird bezugnehmend auf Fig. 7A bis Fig. 8B veranschaulicht, dass mit dem Flugzeugflügel 600 die Aerodynamikeigenschaften wesentlich verbessert sind. Fig. 7A bis Fig. 8B zeigen CFD-Simulationen ("Computational Fluid Dynamics", numerische Strömungssimulation), in denen der Verlauf der Wirbel-Viskosität ("eddy viscosity") in einem Umgebungsbereich eines Flugzeugflügels visualisiert ist. Die CFD-Simulationen aus Fig. 7A bis Fig. 8B sind mit einem (unstrukturierten) Navier-Stokes-Verfahren berechnet.

**Fig. 7A** und **Fig. 8A** zeigen das Strömungsverhalten eines Flugzeugflügels ohne die erfindungsgemäße schwenkbare Hinterkante, **Fig. 7B** und **Fig. 8B** zeigen die verbesserten Strömungseigenschaften bei Vorsehen einer schwenkbaren Hinterkante 304.

Fig. 7A, Fig. 7B zeigen, dass erfindungsgemäß eine "flow separation" bei mittelgroßen Ausfahrwinkeln der Fowlerklappe 302 (zum Beispiel 35°) stark unterdrückt sind. Ferner zeigen Fig. 8A und Fig. 8B die erfindungsgemäße Verbesserung des Strömungsverhaltens in einem Umgebungsbereich der Klappe 302 bei einem hohen Ausfahrwinkel (zum Beispiel 50°).

## Patentansprüche

1. Flugzeugflügel,
mit einem Hauptflügel (301) mit einer schwenkbaren Hinterkante (304), einem Spoiler (501) und mit einer flügelhinterseitigen Auftriebshilfe-Klappe (302);
wobei die Auftriebshilfe-Klappe (302) mit dem Hauptflügel (301) gekoppelt ist und derart eingerichtet ist, dass sie in einem eingefahrenen Zustand (300) an dem Hauptflügel (301) anliegt und in einem ausgefahrenen Zustand (310) mit dem Hauptflügel (301) einen Luftspalt (311) bildet;
wobei die schwenkbare Hinterkante (304) derart schwenkbar ist, dass mittels Schwenkens der schwenkbaren Hinterkante (304) die Form und die Breite des Luftspalts (311) justierbar ist, **dadurch gekennzeichnet, dass**
die schwenkbare Hinterkante (304) an einem Spoiler (501) angebracht ist, der an einem Gehäuse des Hauptflügels (301) angebracht ist.

2. Flugzeugflügel nach Anspruch 1,
wobei die schwenkbare Hinterkante (304) derart schwenkbar ist, dass mittels Schwenkens der schwenkbaren Hinterkante die Breite des Luftspalts (311) konstant oder konvergent gehalten ist.

3. Flugzeugflügel nach Anspruch 1 oder 2,
wobei die schwenkbare Hinterkante (304) derart schwenkbar ist, dass mittels Schwenkens der schwenkbaren Hinterkante die Breite des Luftspalts (311) während zumindest eines Teils des Ausfahrens der Auftriebshilfe-Klappe (302) von dem eingefahrenen Zustand (300) in den ausgefahrenen Zustand (310) konstant oder konvergent gehalten ist.

4. Flugzeugflügel nach einem der Ansprüche 1 bis 3,
wobei sich die schwenkbare Hinterkante (304) entlang der gesamten Spannbreite der Auftriebshilfe-Klappe (302) erstreckt.

5. Flugzeugflügel nach einem der Ansprüche 1 bis 3,
wobei sich die schwenkbare Hinterkante (304) entlang eines Teilbereichs der Spannbreite der Auftriebshilfe-Klappe (302) erstreckt.

6. Flugzeugflügel nach einem der Ansprüche 1 bis 5,
wobei die schwenkbare Hinterkante (304) mittels eines Federelements schwenkbar ist.

7. Flugzeugflügel nach einem der Ansprüche 1 bis 5,
wobei die schwenkbare Hinterkante (304) mittels einer Antriebseinrichtung schwenkbar ist.

8. Flugzeugflügel nach Anspruch 7,
bei dem die Antriebseinrichtung
eine elektrische Antriebseinrichtung; oder
eine hydraulische Antriebseinrichtung
ist.

9. Flugzeugflügel nach einem der Ansprüche 1 bis 8,
mit einem Hilfsflügel (502), der im ausgefahrenen Zustand (310) der Auftriebshilfe-Klappe (302) zwischen dem Hauptflügel (301) und der Auftriebshilfe-Klappe (302) angeordnet ist.

10. Flugzeugflügel nach einem der Ansprüche 1 bis 9,
wobei im ausgefahrenen Zustand (310) der Auftriebshilfe-Klappe (302) zwischen dem Hauptflügel (301) und der Auftriebshilfe-Klappe (302) mehrere Luftspalte (601, 602) gebildet sind.

11. Flugzeugflügel nach einem der Ansprüche 1 bis 10,
wobei die schwenkbare Hinterkante (304) derart eingerichtet ist, dass sie mit Ausnahme einer schwenkbaren Endspitze unbeweglich an dem Spoiler (501) angebracht ist, der an einem Gehäuse des Hauptflügels (301) angebracht ist.

12. Flugzeugflügel nach einem der Ansprüche 1 bis 11,
bei dem die flügelhinterseitige Auftriebshilfe-Klappe (302) eine Fowlerklappe ist.

13. Flugzeugflügel nach einem der Ansprüche 1 bis 11,
bei dem die flügelhinterseitige Auftriebshilfe-Klappe (302) eine Spaltklappe ist.

14. Verfahren zum Betreiben eines Flugzeugflügels,
bei dem
eine mit einem Hauptflügel (301) gekoppelte flügelhinterseitige Auftriebshilfe-Klappe (302) von einem eingefahrenen Zustand (300), in dem die Auftriebshilfe-Klappe (302) an dem Hauptflügel (301) anliegt, in einen ausgefahrenen Zustand (310) gebracht wird, in dem die Auftriebshilfe-Klappe (302) mit dem Hauptflügel (301) einen Luftspalt (311) bildet,
**dadurch gekennzeichnet, dass**
eine schwenkbare Hinterkante (304), die an einem, am Gehäuse des Hauptflügels (301)angebrachten Spoiler (501) angebracht ist, derart geschwenkt wird, dass mittels des Schwenkens der schwenkbaren Hinterkante (304) die Form und die Breite des Luftspalts (311) justiert wird.

15. Verwendung einer schwenkbaren Hinterkante (304) an einem Hauptflügel (301) eines Flugzeugflügels zum Justieren der Form und der Breite eines Luftspalts (311) zwischen dem Hauptflügel (301) und einer ausgefahrenen flügelhinterseitigen Auftriebshilfe-Klappe (302) mittels Schwenkens der schwenkbaren Hinterkante (304), **dadurch gekennzeichnet, dass**
die schwenkbare Hinterkante (304) an einem, am Gehäuse des Hauptflügels (301) angebrachten Spoiler (501) befestigt ist.

## Claims

1. Aircraft wing comprising a main wing (301) with a pivotable trailing edge (304), a spoiler (501) and a lift-assisting flap (302) on the rear of the wing; wherein the lift-assisting flap (302) is coupled to the main wing (301) and is designed in such a way that when in a retracted state (300) it rests against the main wing (301) and when in an extended state (310) it forms an air gap (311) with the main wing (301), wherein the pivotable trailing edge (304) is pivotable in such a way that by means of pivoting the pivotable trailing edge (304) the shape and width of the air gap (311) are adjustable, **characterised in that** the pivotable trailing edge (304) is attached to a spoiler (501) which is attached to a housing of the main wing (301).

2. Aircraft wing according to claim 1, wherein the pivotable trailing edge (304) is pivotable in such a way that by means of pivoting the pivotable trailing edge the width of the air gap (311) is kept constant or convergent.

3. Aircraft wing according to either claim 1 or claim 2, wherein the pivotable trailing edge (304) is pivotable in such a way that by means of pivoting the pivotable trailing edge the width of the air gap (311) is kept constant or convergent during at least part of the extension of the lift-assisting flap (302) from the retracted state (300) into the extended state (310) constant or convergent.

4. Aircraft wing according to any one of claims 1 to 3, wherein the pivotable trailing edge (304) extends along the entire span width of the lift-assisting flap (302).

5. Aircraft wing according to any one of claims 1 to 3, wherein the pivotable trailing edge (304) extends along a part of the span width of the lift-assisting flap (302).

6. Aircraft wing according to any one of claims 1 to 5, wherein the pivotable trailing edge (304) is pivotable by means of a spring element.

7. Aircraft wing according to any one of claims 1 to 5, wherein the pivotable trailing edge (304) is pivotable by means of a drive device.

8. Aircraft wing according to claim 7, in which the drive device is an electrical drive device or a hydraulic drive device.

9. Aircraft wing according to any one of claims 1 to 8, with an auxiliary wing (502), which in the extended state (310) of the lift-assisting flap (302) is arranged between the main wing (301) and the lift-assisting flap (302).

10. Aircraft wing according to any one of claims 1 to 9, wherein in the extended state (310) of the lift-assisting flap (302) a plurality of air gaps (601, 602) are arranged between the main wing (301) and the lift-assisting flap (302).

11. Aircraft wing according to any one of claims 1 to 10, wherein the pivotable trailing edge (304) is arranged in such a way that with the exception of a pivotable end tip it is immovably attached to the spoiler (501) which is attached to a housing of the main wing (301).

12. Aircraft wing according to any one of claims 1 to 11 in which the lift-assisting flap (302) on the rear of the wing is a Fowler flap.

13. Aircraft wing according to any one of claims 1 to 11 in which the lift-assisting flap (302) on the rear of the wing is a slotted flap.

14. Method for operating an aircraft wing in which a lift-assisting flap (302) on the rear of the wing coupled to a main wing (301) is brought from a retracted state (300), in which the lift-assisting flap (302) rests against the main wing (301), into an extended state (310), in which the lift-assisting flap (302) forms an air gap (311) with the main wing (301), **characterised in that** a pivotable trailing edge (304), which is attached to a spoiler (501) attached to the housing of the main wing (301) is pivoted in such a way that by means of the pivoting of the pivotable trailing edge (304) the shape and the width of the air gap (311) are adjusted.

15. Use of a pivotable trailing edge (304) on a main wing (301) of an aircraft wing for adjusting the shape and the width of an air gap (311) between the main wing (301) and an extended lift-assisting flap (302) on the rear of the wing by means of pivoting the pivotable trailing edge (304), **characterised in that** the pivotable trailing edge (304) is attached to a spoiler (501) attached to the housing of the main wing (301).

## Revendications

1. Aile d'avion,
comportant une aile principale (301) dotée d'un bord de fuite pivotant (304), d'un spoiler (501) et d'un volet hypersustentateur (302) du côté arrière de l'aile ;
le volet hypersustentateur (302) étant couplé à l'aile principale (301) et étant installé de telle façon que, dans un état rentré (300), il est accolé à l'aile principale (301) et que dans un état sorti, il forme un passage d'air (311) avec l'aile principale (301) ;
le bord de fuite pivotant (304) pouvant pivoter de telle façon qu'au moyen du pivotement du bord de fuite pivotant (304), la forme et la largeur du passage d'air (311) peuvent être ajustées, **caractérisée en ce que**
le bord de fuite pivotant (304) est monté sur un spoiler (501) qui est monté sur un carter de l'aile principale (301).

2. Aile d'avion selon la revendication 1,
dans laquelle le bord de fuite pivotant (304) peut pivoter de telle façon qu'au moyen du pivotement du bord de fuite pivotant, la largeur du passage d'air (311) est maintenue constante ou convergente.

3. Aile d'avion selon la revendication 1 ou 2,
dans laquelle le bord de fuite pivotant (304) peut pivoter de telle façon qu'au moyen du pivotement du bord de fuite pivotant la largeur du passage d'air (311) est maintenue constante ou convergente pendant au moins une partie du déploiement du volet hypersustentateur (302), de l'état rentré (300) à l'état sorti (310).

4. Aile d'avion selon l'une quelconque des revendications 1 à 3,
dans laquelle le bord de fuite pivotant (304) s'étend le long de la totalité de l'étendue en largeur du volet hypersustentateur (302).

5. Aile d'avion selon l'une quelconque des revendications 1 à 3,
dans laquelle le bord de fuite pivotant (304) s'étend le long d'une partie de l'étendue en largeur du volet hypersustentateur (302).

6. Aile d'avion selon l'une quelconque des revendications 1 à 5,
dans laquelle il est possible de faire pivoter le bord de fuite pivotant (304) au moyen d'un élément à ressort.

7. Aile d'avion selon l'une quelconque des revendications 1 à 5,
dans laquelle il est possible de faire pivoter le bord de fuite pivotant (304) au moyen d'un dispositif d'entraînement.

8. Aile d'avion selon la revendication 7,
dans laquelle le dispositif d'entraînement est
un dispositif d'entraînement électrique ; ou
un dispositif d'entraînement hydraulique.

9. Aile d'avion selon l'une quelconque des revendications 1 à 8,
comportant une aile auxiliaire (502) qui, à l'état sorti (310) du volet hypersustentateur (302), est disposée entre l'aile principale (301) et le volet hypersustentateur (302).

10. Aile d'avion selon l'une quelconque des revendications 1 à 9,
dans laquelle plusieurs passages d'air (601, 602) sont formés entre l'aile principale (301) et le volet hypersustentateur (302).

11. Aile d'avion selon l'une quelconque des revendications 1 à 10,
dans laquelle le bord de fuite pivotant (304) est installé de telle façon que, à l'exception d'une pointe d'extrémité pivotante, il est monté sur le spoiler (501) qui est monté sur un carter de l'aile principale (301).

12. Aile d'avion selon l'une quelconque des revendications 1 à 11,
dans laquelle le volet hypersustentateur (302) du côté arrière de l'aile est un volet Fowler.

13. Aile d'avion selon l'une quelconque des revendications 1 à 11,
dans laquelle le volet hypersustentateur (302) du côté arrière de l'aile est un volet à passage d'air.

14. Procédé de commande d'une aile d'avion,
dans lequel
un volet hypersustentateur (302) du côté arrière de l'aile, couplé à une aile principale (301), est amené d'un état complètement rentré (300) dans lequel le volet hypersustentateur (302) est accolé à l'aile principale (301), à un état complètement sorti (310) dans lequel le volet hypersustentateur (302) forme un passage d'air (311) avec l'aile principale,
**caractérisé en ce que**
l'on fait pivoter un bord de fuite pivotant (304), qui est monté sur un spoiler (501) monté sur le carter de l'aile principale (301), de telle façon que la forme et la largeur du passage d'air (311) sont ajustées au moyen du pivotement du bord de fuite pivotant (304).

15. Utilisation d'un bord de fuite pivotant (304), sur une aile principale (301) d'une aile d'avion, afin d'ajuster la forme et la largeur d'un passage d'air (311) entre l'aile principale (301) et un volet hypersustentateur (302) du côté arrière de l'aile, sorti, au moyen du pivotement d'un bord de fuite pivotant (304), **caractérisé en ce que**
le bord de fuite pivotant (304) est fixé sur un spoiler (501) monté sur un carter de l'aile principale (301).
